## Europäisches Patentamt

## European Patent Office

## Office européen des brevets

(19)

(11) Veröffentlichungsnummer: **0 180 000**
**B1**

(12) **EUROPÄISCHE PATENTSCHRIFT**

(45) Veröffentlichungstag der Patentschrift: **12.12.90**

(51) Int. Cl.⁵: **H 04 Q 1/14**

(21) Anmeldenummer: **85110820.9**

(22) Anmeldetag: **28.08.85**

(54) **Trennvorrichtung mit einer Mehrzahl von den abisolierfreien Anschluss elektrischer Leiter gestattenden Anschlussklemmen.**

(30) Priorität: **28.09.84 DE 3435721**

(43) Veröffentlichungstag der Anmeldung:
**07.05.86 Patentblatt 86/19**

(45) Bekanntmachung des Hinweises auf die
Patenterteilung:
**12.12.90 Patentblatt 90/50**

(84) Benannte Vertragsstaaten:
**AT BE CH DE FR GB LI SE**

(56) Entgegenhaltungen:
**EP-A-0 121 223**
**DE-A-2 645 325**
**DE-A-2 719 269**
**DE-A-2 804 478**
**DE-B-1 958 870**
**DE-B-2 642 779**

(73) Patentinhaber: **Siemens Aktiengesellschaft**
**Wittelsbacherplatz 2**
**D-8000 München 2 (DE)**

(72) Erfinder: **Dolansky, Franz, Ing.**
**Buschingstrasse 41**
**D-8000 München 80 (DE)**
Erfinder: **Scholtholt, Hans, Ing. grad.**
**Tannenstrasse 4**
**D-8044 Lohhof (DE)**
Erfinder: **Steiner, Ewald, Ing. grad.**
**Fichtenweg 11**
**D-8137 Berg 3 (DE)**

**Beschreibung**

Die Erfindung betrifft eine Trennvorrichtung in einem Verteiler für Fernmeldevermittlungsanlagen mit einer Mehrzahl von als Schneidklemmen ausgebildeten Anschlußklemmen (4), die entlang der oberen Längskanten eines im Querschnitt annähernd quadratischen länglichen Isolierstoffkörpers (1) in parallelen Reihen von Aufnahmen gehalten sind, wobei jeweils zwei einander auf beiden Seiten gegenüberliegende Anschlußklemmen (4) für einen ankommenden bzw. abgehenden Leiter elektrisch miteinander verbunden sind, wobei die Anschlußklemmen mit Kontaktfedern (5) verbunden sind, die in eine Kammer des Isolierstoffkörpers hineinragen und dort mit der gegenüberliegenden Kontaktfeder (5) kontaktiert sind, wobei von der Oberseite her durch rechteckige Öffnungen (6) des Isolierstoffkörpers zwischen die Kontaktfederpaare Streckzungen (z.B. von Trennsteckern (7)) einschiebbar sind, die die elektrische Verbindung unterbrechen, und wobei die Anschlußklemmen (4) und die Kontaktfedern (5) ein gemeinsames Bauelement bilden.

Eine derart ausgebildete Trennvorrichtung ist z.B. aus der DE—A—26 45 325 bekannt. Durch das Einschieben von Trennsteckern können die ankommenden Leitungen von den abgehenden Leitungen getrennt werden, in dem ein Trennkontakt aufgetrennt wird. Dabei sind die Trennstecker derart ausgebildet, daß gleichzeitig beide Adern eines Leiters d.h. sowohl die als auch die b-Ader unterbrochen werden können, da der Trennstecker zwei nebeneinanderliegende Zungen aufweist. Da bei Trennleisten nicht nur Trennstecker sondern auch prüfstecker zur Anwendung kommen und bei Prüfsteckern lediglich eine, Seite der Stecker eine Kontaktfläche aufweist, muß beim Stecken eine eindeutige Zuordnung zur a-, bzw, b-Ader gefordert werden. Diese Forderung wird von der bekannten Trennleiste nicht erfüllt, da bei ihr die Gefahr gegeben ist, daß versehentlich, da die Trennkontakte mehrerer Adernpaare in einer Linie nebeneinanderliegen, die a-Ader eines Leiters und gleichzeitig die b-Ader eines benachbarten Leiters aufgetrennt werden können.

Ferner sind nach der DE—A—28 04 478 die Anschlußelemente entlang der oberen Längskanten in zwei Einfachreihen hintereinanderliegend angeordnet. Die Steckeröffnungen für die Trennstecker liegen ebenfalls in einer Reihe.

DE—A—1958870 offenbart eine Trenn vorrichtung wobei; durch blinde Schlitze auf der Oberseite des Isolierstoffkörpers und entsprechende Zungen der Trennstecker, eine eindentige Zuordnnung zur a-, bzw. b—Ader erreicht wird.

Aufgabe der vorliegenden Erfindung ist es, eine Trennvorrichtung der eingangs genannten Art anzugeben, bei der beim Stecken eines Trenn- bzw. Prüfsteckers nicht gleichzeitig zwei Adernpaare betroffen sein können, d.h. daß ein Überstecken zwischen zwei Adernpaare verhindert werden soll.

Diese Aufgabe wird erfindungsgemäß für eine Trennvorrichtung der eingangs genannten Art dadurch gelöst, daß der Isolierstoffkörper (1) mit zwei Doppelreihen von Aufnahmen für die Anschlußklemmen und mit einer Doppelreihe von Öffnungen (6) für die Steckzungen versehen ist, daß jede Doppelreihe von Aufnahmen aus einer inneren und dazu versetzten äußeren Reihe gebildet ist, daß in der Längsrichtung des Isolierstoffkörpers (1) die Aufnahmen einer Doppelreihe abwechselnd der inneren bzw. äußeren Reihe zugeordnet sind, daß die Doppelreihe der Öffnungen (6) in wechselnder Reihenfolge angeordnet sind und daß für alle Paare von Bauelementen (4, 5) die Abstände zwischen den zugehörigen Aufnahmen und Öffnungen gleich sind, wobei die. Größe der Öffnungen (6) für die a-Adern großer oder kleiner als die Öffnungen (6) für die b-Ader sind.

Dadurch, daß bei der erfindungsgemäßen Trennvorrichtung die zwei Einstecköffnungen pro Adernpaar für den Trenn- bzw. Prüfstecker versetzt angeordnet sind und zusätzlich unterschiedliche Größen aufweisen, ist ein Überstecken zwischen zwei Adernpaare unmöglich.

Weitere Ausgestaltungen sowie Vorteile der erfindungsgemäßen Trennvorrichtung ergeben sich aus den Unteransprüchen sowie aus dem nachfolgend beschriebenen Ausführungsbeispiel einer Verteilerleiste gemäß der Erfindung.

Die vorliegende Erfindung soll im folgenden anhand eines in der Figur dargestellten Ausführungsbeispiels näher erläutert werden. Es zeigen

FIG. 1 eine perspektivische Ansicht einer Trennvorrichtung gemäß der Erfindung,

FIG. 2 und 3 perspektivische Ansichten von Anschlußklemmen und Kontaktfedern, wie sie bei der erfindungsgemäßen Trennvorrichtung Anwendung finden, und

FIG. 4 eine teilweise Draufsicht auf eine Trennvorrichtung gemäß FIG. 1.

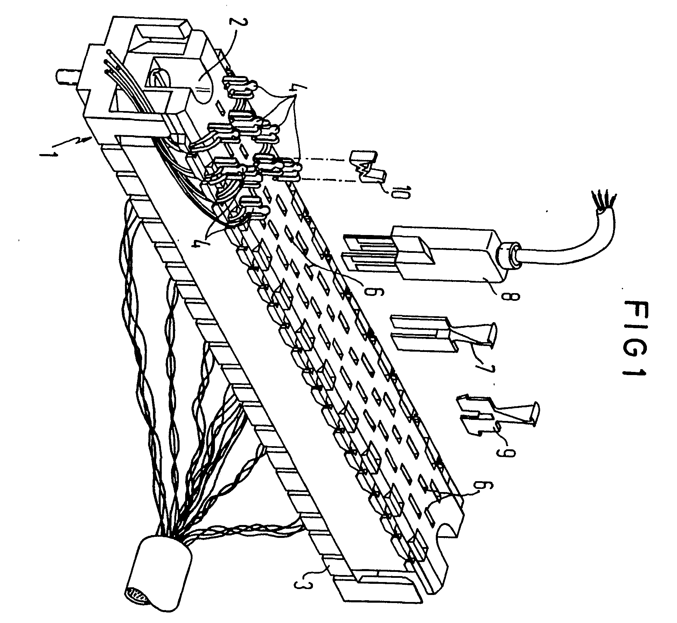

Die in FIG. 1 dargestellte Verteilerleiste besteht im wesentlichen aus dem Isolierstoffkörper 1, der wiederum aus einem Oberteil 2 und einem Unterteil 3 besteht. An den oberen Längsseiten des Isolierstoffkörpers 1 befinden sich die Anschlußklemmen 4, von denen in der Figur nur einige dargestellt sind. Im Oberteil 2 des Isolierstoffkörpers 1 sind Kammern angeordnet, die in der Figur nicht dargestellt sind, in denen die mit den Anschlußklemmen verbundenen Kontaktfedern angeordnet sind.

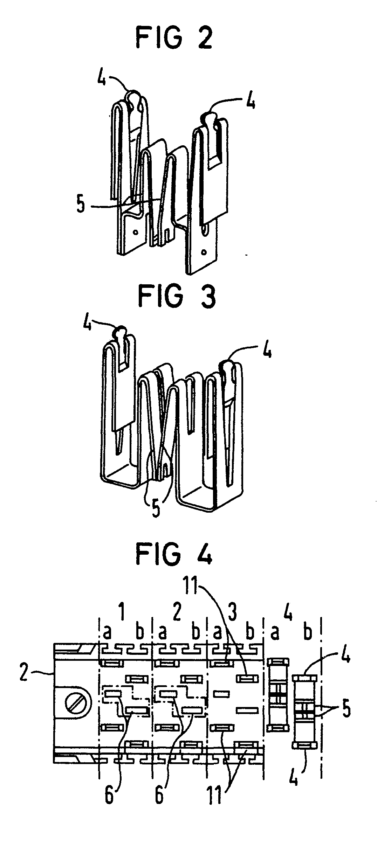

Die Anordnung der Kontaktfedern zu den Anschlußklemmen 4 ergibt sich aus den Fig. 2 und 3. In den Fig. 2 und 3 ist jeweils ein aus einer Anschlußklemme 4 und einer Kontaktfeder 5 bestehendes U-förmiges Bauelement gezeigt. Dabei ist es zweckmäßig die eigentlichen Kontaktstellen, wie es in den Fig. 2 und 3 dargestellt ist, als Kreuzkontakte auszubilden. In Fig. 2 sind jeweils eine Anschlußklemme 4 und die dazugehörige Kontaktfeder 5 als zweistückiges U-förmiges Bauelement ausgebildet, wobei die beiden Teile dieses Bauelements mittels Punktschweissen miteinander verbunden sind. Fig. 3 zeigt eine andere Ausbildung dieses U-förmigen Bauelements. Bei dieser Ausführungsform ist das aus Anschlußklemme 4 und Kontaktfeder 5 bestehende Bauelement einstückig ausgebildet.

In der Oberseite des Isolierstoffkörpers 1 sind rechteckige Öffnungen 6 vorgesehen, durch die ein Trennstecker 7 zwischen die Kontaktfedern 5 geschoben werden kann. Die erfindungsgemäße Verteilerleiste ermöglicht aber auch den Einsatz von Prüfsteckern 8, Blindsteckern 9 und Kennkappen 10. Dadurch, daß die aus den Anschlußklemmen 4 und den Kontaktfedern 5 bestehenden U-förmigen Bauteile alle gleich sind und die Anschlußklemmen an den oberen Längskanten der Trennvorrichtung versetzt angeordnet sind, sind auch die eigentlichen Trennkontakte in der Mitte der Trennvorrichtung versetzt angeordnet. Gleichzeitig sind die einem Adernpaar zugeordneten Öffnungen 6 unterschiedlich groß. Auf diese Weise wird erreicht, daß ein Prüfstecker 8 oder ein Trennstecker 7 immer nur so gesteckt werden kann, daß genau ein Adernpaar aufgetrennt werden kann. Die versetzte Anordnung der Öffnungen 6 ergibt sich besonders deutlich aus Fig. 4, in welcher mit 11 die Öffnungen für die Anschlußklemmen 4 bezeichnet sind.

Die Verteilerleiste gemäß der Erfindung kann auch als reine Erdleiste verwendet werden, in diesem Fall kann von oben ein kammartig ausgebildetes Erdblech in die Öffnungen 6 geschoben werden, welches alle Trennkontakte kontaktiert und alle daran befindlichen Doppelanschlußklemmen mit Erde verbindet.

Bezugszeichenliste
1 Isolierstoffkörper
2 Oberteil
3 Unterteil
4 Anschlußklemme
5 Kontaktfeder
6 Öffnung
7 Trennstecker
8 Prüfstecker
9 Blindstecker
10 Kennkappe

**Patentansprüche**

Trennvorrichtung in einem Verteiler für Fernmeldevermittlungsanlagen mit einer Mehrzahl von als Schneidklemmen ausgebildeten Anschlußklemmen (4), die entlang der oberen Längskanten eines im Querschnitt annähernd quadratischen länglichen Isolierstoffkörpers (1) in parallelen Reihen von Aufnahmen (11) gehalten sind, wobei jeweils zwei einander auf beiden Seiten gegenüberliegende Anschlußklemmen (4) für einen ankommenden bzw. abgehenden Leiter elektrisch miteinander verbunden sind, wobei die Anschlußklemmen mit Kontaktfedern (5) verbunden sind, die in eine Kammer des Isolierstoffkörpers hineinragen und dort mit der gegenüberliegenden Kontaktfeder (5) kontaktiert sind, wobei von der Oberseite her durch rechteckige Öffnungen (6) des Isolierstoffkörpers zwischen die Kontaktfederpaare Steckzungen (z. B. von Trennsteckern (7)) einschiebbar sind, die die elektrische Verbindung unterbrechen, und wobei die Anschlußklemmen (4) und die Kontaktfedern (5) ein gemeinsames Bauelement bilden, dadurch gekennzeichnet,

daß der Isolierstoffkörper (1) mit zwei Doppelreihen von Aufnahmen (11) für die Anschlußklemmen (4) und mit einer Doppelreihe von Öffnungen (6) für die Steckzungen versehen ist, daß jede Doppelreihe von Aufnahmen aus einer inneren und dazu versetzten äußeren Reihe gebildet ist, daß in der Längsrichtung des Isolierstoffkörpers (1) die Aufnahmen (11) einer Doppelreihe abwechselnd der inneren bzw. äußeren Reihe zugeordnet sind, daß die Doppelreihe der Öffnungen (6) für die Steckzungen aus zwei Teilreihen gebildet sind, in denen die Öffnungen (6) in wechselnder Reihenfolge angeordnet sind und daß für alle paare von Bauelementen (4, 5) die Abstände zwischen den zugehörigen Aufnahmen und Öffnungen gleich sind wobei die Größe der Öffnungen (6) für die a-Adern größer oder kleiner als die Öffnungen (6) für die b-Ader sind.

2. Trennvorrichtung nach Anspruch 1, dadurch gekennzeichnet, daß jeweils eine Anschlußklemme (4) und die zugehörige Kontaktfeder (5) als zweistückiges U-förmiges Bauelement ausgebildet sind.

**Revendications**

1. Dispositif de sectionnement dans un répartiteur pour installations de commutation téléphonique comportant une multiplicité de bornes de raccordement (4) réalisées sous la forme de bornes à découpage, qui sont maintenues le long du bord longitudinal supérieur d'un corps en matériau isolant allongé (1) possédant une section transversale approximativement carrée, suivant des rangées parallèles de logements (11), et dans lequel respectivement deux bornes de raccordement (4), qui sont situées en vis-à-vis l'une de l'autre sur les deux côtés et sont prévues pour un conducteur d'arrivée et un conducteur de départ, sont reliées électriquement entre elles, et dans lequel les bornes de raccordement sont reliées à des ressorts de contact (5) qui pénètrent dans une chambre du corps en matériau isolant et établissent un contact avec le ressort de contact opposé (5), et dans lequel peuvent être insérées, à partir de la face supérieure, dans des ouvertures rectangulaires (6) du corps en matériau isolant entre les couples de ressorts de contact, des languettes d'enfichage (par exemple des connecteurs (7)), qui interrompent la liaison électrique, et dans lequel les bornes de raccordement (4) et les ressorts de contact (5) forment un composant commun, caractérisé par le fait que le corps en matériau isolant (1) est équipé de deux doubles rangées de logements (11) pour les bornes de raccordement (4) et d'une double rangée d'ouvertures (6) pour les languettes d'enfichage, que chaque double rangée de logements est formée par une rangée intérieure et une rangée extérieure décalée par rapport à la précédente, que dans la direction longitudinale du corps en matériau isolant (1), les logements (11) d'une double rangée sont associés en alternance à la rangée intérieure ou à la rangée extérieure, que la double rangée des ouvertures (6) pour les languettes d'enfichage est formée de deux rangées partielles, dans lesquelles les ouvertures (6) sont disposées selon une succession alternée, et que pour tous les couples de composants (4, 5), les distances entre les logements et les ouvertures, qui sont associés, sont les mèmes, la taille des ouvertures (6) pour les conducteurs a étant supérieure ou inférieure à la taille des ouvertures (6) pour les conducteurs b.

2. Dispositif de sectionnement suivant la revendication 1, caractérisé par le fait que respectivement une borne de raccordement (4) et le ressort de contact associé (5) sont réalisés sous la forme d'un composant en forme de U, constitué de deux éléments.

**Claims**

1. Isolating device in a distributor for telecommunications exchange systems, with a plurality of connection terminals (4) designed as insulation-piercing connecting devices which are held in parallel rows of holders (11) along the upper longitudinal edges of an oblong insulating-body (1) of approximately square cross-section, in each case two connection terminals (4) lying opposite one another on either side being electrically connected together for an incoming and outgoing conductor, respectively, the connection terminals being connected with contact springs (5) which project into a chamber of the insulating body and make contact there with the opposite contact spring (5), it being possible to push plug pins (e.g. of isolating plugs (7)), which interrupt the electrical connection, from the upper side through rectangular openings (6) of the insulating body between the pairs of contact springs, and the connection terminals (4) and the contact springs (5) forming a common component, characterized in that the insulating body (1) is provided with two double rows of holders (11) for the connection terminals (4) and with a double row of openings (6) for the plug pins, in that each double row of holders is formed of an inner row and an outer row offset thereto, in that, in the longitudinal direction of the insulating body (1), the holders (11) of one double row are assigned to the inner or outer row in alternating fashion, in that the double row of openings (6) for the plug pins is formed of two part-rows in which the openings (6) are arranged in alternating sequence, and in that the spacing between the associated holders and openings is equal for all pairs of components (4, 5), the size of the openings (6) for the a-wires being larger or smaller than the openings (6) for the b-wires.

2. Isolating device according to Claim 1, characterized in that a connection terminal (4) and the associated contact spring (5) are in each case deaigned as a two-part U-shaped component.

# FIG 1

# FIG 2

# FIG 3

# FIG 4